# EUROPEAN PATENT SPECIFICATION

(11) **EP 3 176 135 B1**
(45) Date of publication and mention of the grant of the patent: **22.05.2019**
(21) Application number: 15827288.0
(22) Date of filing: 29.07.2015
(51) Int. Cl.: C03C 27/06, C03C 27/10, E06B 3/66, B32B 17/10, E06B 3/67, E06B 3/663, E06B 3/677, E06B 3/673

(54) **VACUUM MULTILAYER GLASS**
MEHRSCHICHTIGES VAKUUMGLAS
VERRE À VIDE MULTICOUCHE

(30) Priority: 30.07.2014 JP 2014154813
(43) Date of publication of application: 07.06.2017
(73) Proprietor: AGC Inc., Tokyo 100-8405 (JP)
(72) Inventor: KOGA, Masahide, Tokyo 100-8405 (JP); YOKOYAMA, Mika, Tokyo 100-8405 (JP); KAYABA, Noriyoshi, Tokyo 100-8405 (JP); KATO, Keisuke, Tokyo 100-8405 (JP)
(74) Representative: Müller-Boré & Partner Patentanwälte PartG mbB
(86) International application number: PCT/JP2015/071531
(87) International publication number: WO 2016/017709

(56) References cited:
- WO-A1-2006/033380
- WO-A1-2013/073883
- WO-A1-2014/022109
- WO-A1-2014/136151
- WO-A1-2014/136151
- JP-A- 2003 137 612
- JP-A- 2003 212 610
- US-A- 4 683 154

## Description

### BACKGROUND OF THE INVENTION

### 1. Field of the Invention

The present disclosure relates to vacuum multilayer glass.

### 2. Description of the Related Art

A vacuum multilayer glass has a first glass plate, a second glass plate and a reduced pressure space formed between the first glass plate and the second glass plate. The reduced pressure space is a space of a pressure less than the atmospheric pressure. The vacuum multiplayer glass is excellent at thermal insulation properties and used for a window glass for construction.

A manufacturing method of a vacuum multilayer glass includes a step of sealing peripheries of the first glass plate and the second glass plate with a sealing material, a step of attaching a glass tube to a hole of the first glass plate, then vacuuming the gases from the glass tube, and a step of melting an end part of the glass tube to close the glass tube (See for example Patent Document 1).

### [Citation List]

### [Patent Literature]

[PTL 1] Japanese Unexamined Patent Application Publication No. H10-2161 (belonging to the family of international application WO9748650 A1).

Further examples of prior art vacuum multilayer glass can be found in the following publications: WO2013073883 A1, US4683154 A, WO2006033380 A1 and WO2014136151 A1.

### SUMMARY OF THE INVENTION

### [Technical Problem]

The other manufacturing method of vacuum multilayer glass includes a method in which an assembly including a first glass plate, a second glass plate and a sealing material is carried into a heating furnace, and both bonding and sealing are performed under a reduced pressure environment in the heating furnace.

The vacuum multilayer glass may include a getter material inside. The getter material is activated by heating and absorbs gases inside the vacuum multilayer glass. Therefore, the degree of vacuum inside the vacuum multilayer glass can be maintained, and the thermal insulation effect can be maintained.

Conventionally, a getter material is activated after a bonding/sealing process by non-contact and local heating, such as induction heating, or laser. Therefore, the production of the vacuum multilayer glass has been inefficient.

The present invention is made in consideration of the above-described problem, and aims at providing a vacuum multilayer glass, the production efficiency of which is improved in a case of performing both bonding and sealing under a reduced pressure environment in the heating furnace.

### [Solution to Problem]

The manufacturing method of a vacuum multilayer glass of the present invention includes assembling an assembly including a first glass plate, a second glass plate, a sealing material and a getter material; carrying a conveyance table for conveying the assembly into a heating furnace; and heating the assembly in a reduced pressure space in the heating furnace to melt the sealing material and to activate the getter material at the same time, then solidifying the sealing material to bond the first glass plate and the second glass plate with the sealing material and to seal the reduced pressure space formed between the first glass plate and the second glass plate in a state of including the getter material, and causing the getter material to absorb gases inside the reduced pressure space.

### [Advantageous effect of Invention]

The production efficiency of the method of producing the vacuum multilayer glass of the present invention is improved by performing both bonding and sealing under a reduced pressure environment in a heating furnace.

### BRIEF DESCRIPTION OF THE DRAWINGS

FIG. 1 is a flowchart depicting a manufacturing method of a vacuum multilayer glass according to a first embodiment.
FIG. 2 is a cross sectional diagram depicting an assembly in an assembling process according to the first embodiment.
FIG. 3 is a cross sectional diagram depicting a bonding/sealing process according to the first embodiment.
FIG. 4 is a cross sectional diagram depicting a vacuum multilayer glass according to the first embodiment.
FIG. 5 is a cross sectional diagram depicting a vacuum multilayer glass according to a second embodiment.

### DESCRIPTION OF THE PREFERRED EMBODIMENTS

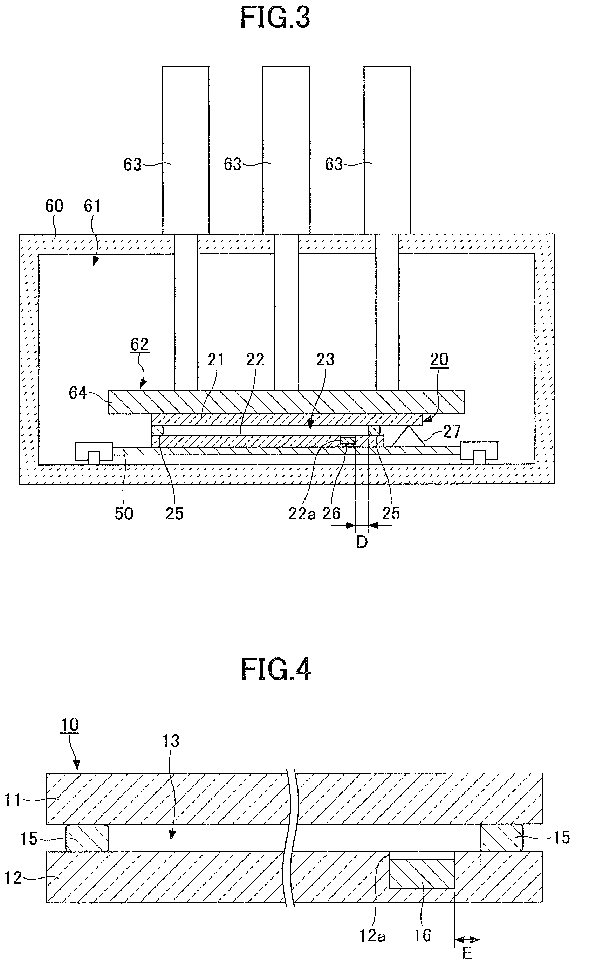

In the following, referring to the accompanying drawings, a method used for obtaining a vacuum multilayer glass of the present invention (the glass of figure 4) will be described. The vacuum multilayer glass of figure 4 is referred as "first embodiment" in the following text. In each drawing, to the same or corresponding member the same or corresponding reference numeral is assigned, and an explanation thereof will be omitted. In the specification, a symbol "-"representing a range of numerical values indicates a range including numerical values of smaller end and greater end.

### [First Embodiment]

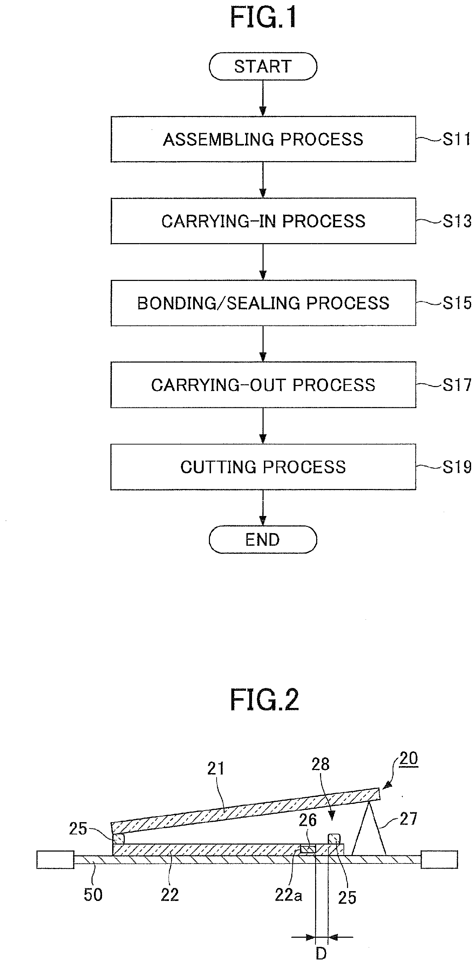

FIG. 1 is a flowchart depicting a manufacturing method of a vacuum multilayer glass according to the first embodiment. FIG. 2 is a cross-sectional diagram depicting an assembly in an assembling process according to the first embodiment. FIG. 3 is a cross-sectional diagram depicting the assembly in the bonding/sealing process according to the first embodiment.

As illustrated in FIG. 1, the manufacturing method of the vacuum multilayer glass includes an assembling process (step S11), a carrying-in process (step S13), a bonding/sealing process (step S15), a carrying-out process (step S17), and a cutting process (step S19). In the assembling process (step S11), an assembly 20 is assembled, as illustrated in FIG. 2. The assembly 20 includes an upper glass plate 21 as a first glass plate, a lower glass plate 22 as a second glass plate, a sealing material 25, a getter material 26, and a spacer for degassing 27. The spacer for degassing 27 may not be a part of the vacuum multilayer glass.

The upper glass plate 21 and the lower glass plate 22 may be glass plates commonly used for construction. A heat reflecting film may be formed on at least one of the upper glass plate 21 and the lower glass plate 22. The heat reflecting film is formed of silver, tin oxide, or the like. The heat reflecting film is also called a Low-E (Low Emissivity) film.

The upper glass plate 21 and the lower glass plate 22 are formed of the same kind of glass, but may be formed of different kinds of glass. The upper glass plate 21 may be larger than the lower glass plate 22, and in upward gaze, the upper glass plate 21 may protrude from the lower glass plate 22.

The sealing material 25 is formed in a shape of a frame, and arranged between the upper glass plate 21 and the lower glass plate 22. The sealing material 25 may be, for example, a paste. The sealing material may be a material obtained by heat treatment for the paste.

The paste includes, for example, a glass frit, a solvent, an organic binder, and the like. The glass frit includes, for example, a ZnO-Bi₂O₃-B₂O₃ based glass, a ZnO-SnO-P₂O₅ based glass, a TeO₂-V₂O₅ based glass, or the like. The solvent is used for adjusting viscosity of the paste, and is removed by heat treatment. The organic binder is used for binding the glass frit together after desiccation, and is removed by heat treatment. The paste may further include ceramic particles or the like as filler.

The paste is applied, for example, onto a surface of the lower glass plate 22 opposed to the upper glass plate 21. Then, after solvent or organic binder is removed by heat treatment, the glass frit is melted, and thereby a glass layer is obtained.

Although in the first embodiment, the paste is applied onto the surface of the lower glass plate 22 opposed to the upper glass plate 21, the paste may be applied onto a surface of the upper glass plate 21 opposed to the lower glass plate 22. In this case, the surface of the upper glass plate 21 to be opposed to the lower glass plate 22 may be subjected in advance to the application of the paste and the heat treatment in a state where the surface is directed upward.

A melting temperature of the sealing material 25 is from 450 to 520 °C, preferably from 460 to 520 °C, and more preferably from 460 to 500 °C, when the sealing material 25 includes a ZnO-Bi₂O₃-B₂O₃ based glass or a ZnO-SnO-P₂O₅ based glass. When the sealing material 25 includes a TeO₂-V₂O₅ based glass, the melting temperature of the sealing material 25 is from 350 to 450 °C, preferably from 360 to 380 °C. The melting temperature of the sealing material 25 is a temperature at which the sealing material 25 is melted. When the sealing material 25 includes glass, the melting temperature of the sealing material 25 indicates fluidity of the composition when the sealing material 25 is sealed, i.e. a temperature at which a flow button diameter becomes greater than 17 mm. The flow button diameter is a diameter of a compact of a mixed powder obtained by mixing glass frit and filler with the same amounts and the same ratios as the paste forming the sealing material 25, which is retained for 30 minutes at a set temperature. The compact is obtained by pressing the above-described mixed powder at a load of 50 to 100 kg-weight/cm² to form a cylinder with a diameter of 12.7 mm.

Although the sealing material 25 according to the first embodiment is formed of a glass frit or the like, the sealing material may be formed of a wax material or a solder material.

The getter material 26 has a passive layer formed in a manufacturing process of the getter material 26, and can be handled in the atmosphere. When the getter material 26 is heated, the passive layer diffuses inside the getter material 26, and thereby the getter material 26 is activated. The activated getter material 26 absorbs gases. As the getter material 26, for example, a commonly used getter material of non-evaporation type is used. Specifically, a porous sintered body or the like including one or more kinds of metal selected from Ti, Zr, Hf, V, Fe, Al, Cr, Nb, Ta, W, Mo, Ni, Mn, Y or alloy thereof is used.

Total used amount of the getter material 26 is 4×V mg or more, where the volume of the reduced pressure space is V cc.

The getter material 26 is set on a concave portion 22a formed on the upper surface of the lower glass plate 22. The concave portion 22a is formed inside the sealing material 25 in the shape of a frame. The number and the shape of the getter material 26 are not particularly limited.

The spacer for degassing 27 is, for example, placed on a conveyance table 50, supports the upper glass plate 21, and forms a gap between the upper glass plate 21 and the sealing material 25. The gap 28 only has to be formed on at least a part of the sealing material 25, as illustrated in FIG. 2, and may not be formed all over the sealing material 25.

The spacer for degassing 27 supports a part of the upper glass plate 21 that protrudes from the lower glass plate 22 in upward gaze, and inclines the upper glass plate 21 to the lower glass plate 22. The spacer for degassing 27 may support the upper glass plate 21 parallel to the lower glass plate 22.

The height of the spacer for degassing 27 may be changed by a pressing force. For example, the spacer for degassing may be a piece of metal having a cross sectional shape that collapses by a pressing force (a shape of inverted V in FIG. 2). The cross sectional shape of the piece of metal may have a wavy shape, and is not particularly limited.

The spacer for degassing 27 may be a piece of glass. The piece of glass is melted at a temperature that is lower than that of the piece of metal, and collapses by a pressing force. Moreover the spacer for degassing 27 may be an elastic body, such as a spring.

In the carrying-in process (step S13), the conveyance table 50 conveying the assembly 20 is carried into the heating furnace. The conveyance table 50 may be carried in from an entrance of the heating furnace, go through a plurality of zones, and be carried out from an exit of the heating furnace.

As the conveyance table 50 moves in the heating furnace, when the sealing material 25 is a paste, the paste is subjected to a thermal treatment, solvent or organic binder is removed, and thereby a glass layer is obtained. Afterwards, the bonding/sealing process is performed under a reduced pressure environment in the heating furnace.

In the bonding/sealing process (step S15), as illustrated in FIG. 3, in the reduced pressure space 61 of the heating furnace 60, the assembly 20 is heated to melt the sealing material 25 and activate the getter material 26. The heating temperature for the assembly 20 is set higher than the melting temperature for the sealing material 25. The activation of the getter material 26 progresses to some extent before the temperature of the sealing material 25 reaches the melting temperature.

The reduced pressure space 61 is a space with a pressure less than the atmospheric pressure. The pressure in the reduced pressure space 61 may be, for example, from 1×10⁻⁵ Pa to 10 Pa, and preferably from 1×10⁻⁵ Pa to 0.1 Pa.

### <Bonding/sealing process by mechanical pressurization>

After the sealing material 25 is melted, in the reduced pressure space 61 in the heating furnace 60, a pressurizing member 62 is arranged above the conveyance table 50 and the conveyance table 50 pressurizes the assembly 20. The pressurizing member 62 includes, for example, the multiple fluid pressure cylinders 63 and pressurizing plates 64. A main body of each fluid pressure cylinder 63 is fixed on a ceiling of the heating furnace 60, and a tip of a rod of each fluid pressure cylinder 63 is fixed to the pressurizing plates 64. The pressurizing plates 64 are set vertically movable to the conveyance table 50.

The multiple fluid pressure cylinders 63 move the pressurizing plates 64 downward, and the assembly 20 is held by the pressurizing plates 64 and the conveyance table 50 and pressed. Therefore, the height of the spacer for degassing 27 is reduced, and the formation of the gap 28 by the spacer for degassing 27 is released. Then, both the upper glass plate 21 and the lower glass plate 22 adhere to the sealing material 25, and the reduced pressure space 23 formed between the upper glass plate 21 and the lower glass plate 22 is surrounded by the sealing material 25.

Subsequently, in the reduced pressure space 61 in the heating furnace 60, the temperature in the heating furnace 60 is decreased to the melting temperature of the sealing material 25 or less while pressing the assembly 20 by the pressurizing plates 64 and the conveyance table 50, and thereby causing fluidity of the sealing material 25 to disappear. Afterwards, by solidifying the sealing material 25, the upper glass plate 21 and the lower glass plate 22 are bonded to each other and the reduced pressure space 23 formed between the upper glass plate 21 and the lower glass plate 22 is sealed.

The getter material 26 inside the reduced pressure space 23 is activated and absorbs gases inside the reduced pressure space 23. The gases in the reduced pressure space 23 include gases discharged from the sealing material 25 and gases released from the reduced pressure space 23. The gases discharged from the sealing material 25 are decomposed from organic substances into CO, CO₂ and the like when the sealing material 25 is heated, and are easily absorbed by the getter material 26.

Afterwards, the multiple fluid pressure cylinders 63 raise the pressurizing plates 64 to release the pressing force on the assembly 20. The timing of the releasing in the first embodiment is after the fluidity of the sealing material 25 disappears, but may be at any time after both the upper glass plate 21 and the lower glass plate 22 make contact with the sealing material 25. However, when as the space for degassing 27 an elastic body is used, the timing of the releasing is after the fluidity of the sealing material 25 disappears.

### <Bonding/sealing process by pressure difference>

Instead of the above-described "bonding/sealing process by mechanical pressurization" the "bonding/sealing process by pressure difference" may be used. The bonding/sealing process by pressure difference means that in the state where the temperature in the heating furnace 60 is decreased to the melting temperature of the sealing material 25 or less and the fluidity of the sealing material 25 is reduced, the assembly is introduced from the reduced pressure space 23 into a space with a pressure that is greater than that of the reduced pressure space 23 (e.g. a space of atmospheric pressure), and thereby the entire surface of the assembly 20 is pressed uniformly by the difference between the pressures. "Bonding/sealing process by pressure difference" makes a mechanical pressurizing mechanism in the "bonding/sealing process by mechanical pressurization" becomes unnecessary. Therefore, for example, a lot of assemblies arranged in multiple shelves can be bonded and sealed at once.

The space with the pressure that is greater than that of the reduced pressure space 23 is not necessarily the space of atmospheric pressure, but may be a space with a pressure that is sufficiently high for the bonding/sealing.

In the carrying-out process (step S17), the conveyance table 50 conveying the assembly 20 is carried out from inside of the heating furnace 60. Before being carried out from inside of the heating furnace 60, in the heating furnace 60, the assembly 20 is cooled slowly.

In the cutting process (step S19), a vacuum multilayer glass is obtained by cutting each assembly 20 carried out from inside the heater furnace 60. For example, in the cutting process, a part of the upper glass plate 21 protruding from the lower glass plate 22 as viewed from above is removed, and thereby the vacuum multilayer glass is obtained.

In the cutting process, multiple vacuum multilayer glasses may be obtained by cutting one assembly 20. In this case, each assembly 20 includes multiple sealed areas by sealing material 25, and cutting is performed between sealed areas sealed by the sealing material 25.

The cutting process is an arbitrary process, and may not be performed.

As described above, according to the first embodiment, after the sealing material 25 is melted in the reduced pressure space 61 in the heating furnace 60 and the getter material 26 is activated, the bonding and sealing are performed, and thereby the reduced pressure space 23 is formed. The getter material 26 is confined inside the reduced pressure space 23, and the getter material 26 absorbs gasses inside the reduced pressure space 23. Because the activation of the getter material 26 is performed in the bonding/sealing process, a process of heating the getter material 26 locally after the bonding/sealing process by using induction heating or other means can be omitted.

Moreover, according to the first embodiment, because the activation of the getter material 26 is performed in the bonding/sealing process, a distance D between the getter material 26 and at least a part of the sealing material 25 is set to 20 mm or less, and the getter material 26 can be arranged at an edge portion of the vacuum multilayer glass. Therefore, an appearance of the vacuum multilayer glass is good. When the getter material 26 is activated by the local heating using the induction heating or other means, the distance D cannot be set to 20 mm or less. In the case where the distance D is 20 mm or less, when the getter material 26 is activated by the local heating using the induction heating or other means, the sealing material 25 melts and the sealing is broken.

FIG. 4 is a cross-sectional diagram depicting the vacuum multilayer glass according to the first embodiment. The vacuum multilayer glass 10 illustrated in FIG. 4 is manufactured by the manufacturing method illustrated in FIGs. 1 to 3. The vacuum multilayer glass 10 includes a first glass plate 11, a second glass plate 12, a reduced pressure space 13, a sealing material 15 and a getter material 16. Between the first glass plate 11 and the second glass plate 12, spacers to retain the gap between them may be arranged.

The first glass 11 and the second glass 12 may be glass plates commonly used for architecture. A heat reflecting film may be formed on at least one of the first glass plate 11 and the second glass plate 12. The heat reflecting film is formed of silver, tin oxide, or the like. The heat reflecting film is also called a Low-E (Low Emissivity) film.

The first glass plate 11 and the second glass plate 12 are the same kind of glass, but may be different kinds of glass. The first glass plate 11 and the second glass plate 12 may be the same size, and thicknesses of the first glass plate 11 and the second glass plate 12 may be different. Between the first glass plate 11 and the second glass plate 12 a reduced pressure space 13 is formed.

The sealing material 15 bonds the first glass plate 11 and the second glass plate 12 each other and seals the reduced pressure space 13. The sealing material 15 is formed peripherally in a shape of a frame on the first glass plate 11, on the second glass plate 12, or on both glasses, and surrounds the reduced pressure space 13. The reduced pressure space 13 is a space with pressure lower than the atmospheric pressure. The pressure of the reduced pressure space 13 is, for example, 0.001 - 0.2 Pa.

The sealing material includes, for example, a glass layer. The glass layer is formed by performing heat treatment for a paste including a glass frit. The glass frit includes, for example, a ZnO-Bi₂O₃-B₂O₃ based glass, a ZnO-SnO-P₂O₅ based glass, a TeO₂-V₂O₅ based glass, or the like. The glass layer may include ceramic particles. The sealing material 15 may also be formed of a wax material or a solder material.

The getter material 16 has been activated in a manufacturing process of the vacuum multilayer glass 10, and absorbs gasses in the reduced pressure space 13. The getter material 16, for example, non-evaporative general type getter material is used. In particular, a porous sintered body or the like including one or more kinds of metal selected from Ti, Zr, Hf, V, Fe, Al, Cr, Nb, Ta, W, Mo, Ni, Mn, and Y or alloy thereof is used.

The getter material 16 is set on a concave portion 12a formed on a surface of the second glass plate 12 opposed to the first glass plate 11. The concave portion 12a is formed inside the sealing material 15 having the shape of a frame. The position of the getter material 16 is not particularly limited. For example, the getter material 16 may be adhere onto a surface of the second glass plate 12 opposed to the first glass plate 11, or onto a surface of the first glass plate 11 opposed to the second glass plate 12. The concave portion 12a may be unnecessary. Moreover, also a number, a shape or the like of the getter material 16 is not particularly limited.

After the sealing material 15 melts and the getter material 16 is activated, bonding and shielding are performed to form a reduced pressure space 13. The getter material 16 is confined in the reduced pressure space 13 and the getter material 16 absorbs gasses in the reduced pressure space 13. Because the activation of the getter material is performed in the bonding/sealing process, a process of heating the getter material 16 locally after the bonding/sealing process by using induction heating or other means can be omitted.

Because the activation of the getter material 16 is performed in the bonding/sealing process, a process of activation of the getter material 16 after the bonding/sealing process can be omitted. Therefore, a distance E between the getter material 16 and at least a part of the sealing material 15 can be set to 20 mm or less, and the getter material 16 can be arranged at an edge portion of the vacuum multilayer glass 10. Then, an appearance of the vacuum multilayer glass 10 is good. In the case where the getter material 16 is activated by the induction heating after the bonding/sealing process, the distance E cannot be set to 20 mm or less. In the case where the distance E is 20 mm or less, when the getter material 16 is activated by the induction heating, the sealing material 15 melts and the sealing is broken.

### [Second Embodiment]

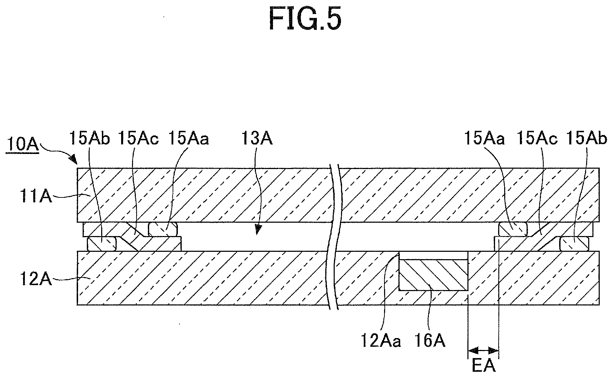

FIG. 5 is a cross-sectional diagram depicting a vacuum multilayer glass according to a second embodiment. The vacuum multilayer glass 10A includes a first glass plate 11A, a second glass plate 12A, a reduced pressure space 13A, a first sealing material 15Aa, a second sealing material 15Ab, a metallic member 15Ac, and a getter material 16A. The getter material 16A is set on a concave portion 12Aa formed on a surface of the second glass plate 12A opposed to the first glass plate 11A.

The vacuum multilayer glass 10A illustrated in FIG. 5 is different from the vacuum multilayer glass 10 illustrated in FIG. 4 in terms of that the vacuum multilayer glass 10A has a stress-relaxation structure. In the following, differences will be mainly described.

The first sealing material 15Aa and the second sealing material 15Ab include, for example, glass layers. The glass layer is formed, for example, by performing heat treatment for a paste including a glass frit. The glass layer may include ceramic particles. Moreover, the first sealing material 15Aa and the second sealing material 15Ab may be formed of a wax material or a solder material.

The first sealing material 15Aa is formed peripherally in a shape of a frame on the first glass plate 11A and bonds the first glass plate 11A and the metallic member 15Ac. The first sealing material 15Aa is out of contact with the second glass plate 12A and is not bonded to the second glass plate 12A.

The second sealing material 15Ab is formed peripherally in a shape of a frame along on the second glass plate 12A and bonds the second glass plate 12A and the metallic member 15Ac. The second sealing material 15Ab is out of contact with the first glass plate 11A and is not bonded to the first glass plate 11A.

The metallic member 15Ac has a deformable portion between a part at which the metallic member 15Ac is bonded to the first sealing material 15Aa and a part at which the metallic member 15Ac is bonded to the second sealing material 15Ab. Therefore, a stress occurring between the first glass plate 11A and the second glass plate 12A can be tolerated by deformation of the metallic member 15Ac.

Melting temperatures of the first sealing material 15Aa and the second sealing material 15Ab are, for example, from 450 to 520 °C, preferably from 460 to 520 °C, and more preferably from 460 to 500 °C, when the first sealing material 15Aa and the second sealing material 15Ab are ZnO-Bi₂O₃-B₂O₃ based glass or ZnO-SnO-P₂O₅ based glass. When the first sealing material 15Aa and the second sealing material 15Ab are TeO₂-V₂O₅ based glass, the melting temperatures of the first sealing material 15Aa and the second sealing material 15Ab are from 350 to 450 °C, preferably from 360 to 380 °C. The first sealing material 15Aa and the second sealing material 15Ab may be formed of the same material, but may be formed of different materials.

When the first sealing material 15Aa and the second sealing material 15Ab are heated at a temperature greater than the melting temperatures of the first sealing material 15Aa and the second sealing material 15Ab, the getter material 16A can be activated. Therefore, a process of heating the getter material 16A locally after the bonding/sealing process by using induction heating or other means can be omitted.

Because the activation of the getter material 16A is performed in the bonding/sealing process, a distance EA between the getter material 16A and at least a part of the first sealing material 15Aa, which is an inner one of the first sealing material 15Aa and the second sealing material 15Ab, is set to 20 mm or less, and the getter material 16A can be arranged at an edge portion of the vacuum multilayer glass 10A. Then, an appearance of the vacuum multilayer glass 10A is good. When the getter material 16A is activated by the local heating using the induction heating or the other means, the distance EA cannot be set to 20 mm or less. In the case where the distance EA is 20 mm or less, when the getter material 16A is activated by the local heating using the induction heating or the other means, the first sealing material 15Aa melts and the sealing is broken.

The vacuum multilayer glass 10A illustrated in FIG. 5 can be manufactured by the manufacturing method illustrated in FIG. 1 to 3, in the same way as the vacuum multilayer glass 10 illustrated in FIG. 4.

As described above, embodiments or the like of the manufacturing methods of vacuum multilayer glass have been described. However, the present invention is not limited to the embodiments. Various variations and modifications may be made without departing from the scope of the present invention recited in claims.

For example, the number and the arrangement of the spacers for degassing 27 may vary widely. The spacer for degassing 27 only has to form a gap between the sealing material 25 and at least one of the upper glass plate 21 and the lower glass plate 22.

Although the spacer for degassing 27 according to the embodiments changes its height thereof by a pressing force, the space which height does not change may be selected. In this case, the formation of the gap 28 by the spacer for degassing 27 can be released by changing the position or the direction of the spacer for degassing 27 with respect to the conveyance table 50.

The spacer for degassing 27 may not necessarily be used. When the spacer for degassing 27 is not used, the upper glass plate and the lower glass plate may be the same size, and the cutting process may be omitted.

The heating furnace 60 according to the embodiments is a continuous heating furnace, but may be a batch type heating furnace.

The present application is based on and claims the benefit of priority of Japanese Priority Application No. 2014-154813 filed on July 30, 2014.

### REFERENCE SIGNS LIST

- 10: vacuum multilayer glass
- 11: first glass plate
- 12: second glass plate
- 13: reduced pressure space
- 15: sealing material
- 16: getter material
- 20: assembly
- 21: upper glass plate
- 22: lower glass plate
- 23: reduced pressure space
- 25: sealing material
- 26: getter material
- 27: spacer for degassing
- 50: conveyance table
- 60: heating furnace
- 61: reduced pressure space
- 62: pressurizing member
- 63: fluid pressure cylinder
- 64: pressurizing plate

## Claims

1. A vacuum multilayer glass comprising:
a first glass plate;
a second glass plate;
a reduced pressure space formed between the first glass plate and the second glass plate;
a sealing material formed to bond the first glass plate and the second glass plate and to seal the reduced pressure space; and
a getter material formed to absorb gasses in the reduced pressure space,
wherein a distance between the getter material and at least a part of the sealing material is less than or equal to 20 mm,
the getter material is set on a concave portion formed on the upper surface of the lower glass plate, and
the getter material is confined inside the reduced pressure space.

## Patentansprüche

1. nspruch 1] Vakuum-Mehrschichtglas, umfassend:
eine erste Glasplatte;
eine zweite Glasplatte;
einen Raum mit reduziertem Druck, der zwischen der ersten Glasplatte und der zweiten Glasplatte gebildet ist;
ein Dichtungsmaterial, das ausgebildet ist, um die erste Glasplatte und die zweite Glasplatte zu verbinden und den Raum mit reduziertem Druck abzudichten; und
ein Gettermaterial, das ausgebildet ist, um Gase in dem Raum mit reduziertem Druck zu absorbieren,
wobei ein Abstand zwischen dem Gettermaterial und mindestens einem Teil des Dichtungsmaterials kleiner oder gleich 20 mm ist,
das Gettermaterial auf einem konkaven Teil, gebildet auf der oberen Oberfläche der unteren Glasplatte, angeordnet ist, und
das Gettermaterial innerhalb des Raumes mit reduziertem Druck eingeschlossen ist.

## Revendications

1. Verre multicouche sous vide comprenant :
une première plaque de verre ;
une seconde plaque de verre ;
un espace à pression réduite formé entre la première plaque et la seconde plaque de verre ;
un matériau de joint formé pour lier la première plaque de verre et la seconde plaque de verre et pour sceller l'espace à pression réduite ; et
un matériau absorbeur formé pour absorber des gaz dans l'espace à pression réduite,
dans lequel une distance entre le matériau absorbeur et au moins une partie du matériau de joint est inférieure ou égale à 20 mm,
le matériau absorbeur est établi sur une partie concave formée sur la surface supérieure de la plaque de verre inférieure, et
le matériau absorbeur est confiné à l'intérieur de l'espace à pression réduite.
